(19) Europäisches Patentamt
European Patent Office
Office européen des brevets

(11) Veröffentlichungsnummer: **0 415 115 A2**

# (12) EUROPÄISCHE PATENTANMELDUNG

(21) Anmeldenummer: 90114834.6

(22) Anmeldetag: 02.08.90

(51) Int. Cl.5: **B01D 19/02**, G05D 11/13

(30) Priorität: **11.08.89 DE 3926547**

(43) Veröffentlichungstag der Anmeldung:
**06.03.91 Patentblatt 91/10**

(84) Benannte Vertragsstaaten:
**GR**

(71) Anmelder: **Henkel Kommanditgesellschaft auf Aktien**
**Postfach 1100 Henkelstrasse 67**
**W-4000 Düsseldorf-Holthausen(DE)**

(72) Erfinder: **Brügel, Emil**
**An Haus Neurath 6**
**W-4048 Grevenbroich 3(DE)**
Erfinder: **Buick, Kurt**
**Liebigstrasse 25**
**W-4040 Neuss 1(DE)**
Erfinder: **Molz, Thomas, Dr.**
**Taubenstrasse 49 d**
**W-4010 Hilden(DE)**
Erfinder: **Stephan, Wolfgang**
**An der Obermühle 97**
**W-4048 Grevenbroich 2(DE)**

(54) **Dosieranlage zum Behandeln von Flüssigkeiten.**

(57) Die Erfindung betrifft eine Dosieranlage für flüssige oder pastöse Additive (4), zum Behandeln von Flüssigkeiten (1), insbesondere von Wasser, mit einer Dosierpumpe (2) zum Dosieren der Additive (4) und einer weiteren Pumpe (3), deren Eingang an den Ausgang der Dosierpumpe (2) und an die zu behandelnde Flüssigkeit (1) angeschlossen ist, gekennzeichnet durch einen die Schaumhöhe der zu behandelnden Flüssigkeit erfassenden Sensor (5) und eine daran angeschlossene Steuereinheit zum Ansteuern der Dosierpumpe (2) in Abhängigkeit von der gemessenen Schaumhöhe.

Fig. 1

EP 0 415 115 A2

## DOSIERANLAGE ZUM BEHANDELN VON FLÜSSIGKEITEN

Die Erfindung betrifft eine Dosieranlage für flüssige oder pastöse Additive zum Behandeln von Flüssigkeiten, insbesondere von Wasser, mit einer Dosierpumpe zum Dosieren der Additive und einer weiteren Pumpe, deren Eingang an den Ausgang der Dosierpumpe und an die zu behandelnde Flüssigkeit angeschlossen ist.

Aus der früheren, aber nachveröffentlichten Patentanmeldung P 38 21 132 ist eine Dosieranlage für Flüssigadditive insbesondere hoher Viskositäten mit einer Dosierpumpe zum kontinuierlichen Behandeln von Flüssigkeiten und mit einer weiteren Pumpe bekannt, deren Eingang an den Ausgang der Dosierpumpe und an die zu behandelnde Flüssigkeit angeschlossen ist.

In den Lackierbetrieben der Automobilindustrie wird der sogenannte Overspray beim Lackieren durch die Raumluft aufgenommen, die kontinuierlich durch Gaswäscher gereinigt wird. In diesen Wäschern wird der Lacknebel von dem Waschwasser aufgenommen und durch Zusatz von Koaguliermitteln entklebt. Als Wasserreservoir für das Kreislaufwasser und als Verweilzeitbecken zum Entkleben dienen sogenannte Sammelbecken, die infolge der Lösungsmittelanteile im Lack und durch den Eintrag von Tensiden beim Reinigen zum Schäumen neigen. Der Schaum wurde in der Vergangenheit durch manuelles Zugeben von Entschäumer bei Bedarf oder vorbeugend durch kontinuierlich dosierende Entschäumerpumpen bekämpft. In der früheren Pa tentanmeldung P 38 21 132 ist zum Beispiel eine solche kontinuierlich dosierende Anlage dargestellt.

Der Erfindung liegt die Aufgabe zugrunde, eine Dosieranlage der eingangs genannten Art an unterschiedliche zu behandelnde Flüssigkeiten, deren Eigenschaften auch mit der Zeit variieren können, insbesondere kontinuierlich anzupassen.

Diese Aufgabe wird erfindungsgemäß durch einen die Schaumhöhe der zu behandelnden Flüssigkeit erfassenden Sensor und eine daran angeschlossene Steuereinheit zum Ansteuern der Dosierpumpe in Abhängigkeit von der gemessenen Schaumhöhe gelöst. Die erfindungsgemäße Anlage mißt also die Schaumhöhe im Sammelbecken und erhöht bzw. erniedrigt bei bestimmten Schaumgrenzen die Dosierrate oder schaltet bei diesen Grenzen die Dosierpumpe ein bzw. aus. Insbesondere wird die Schaumhöhe kontinuierlich gemessen.

Die Dosierrate der den Entschäumer fördernden Dosierpumpe wird von einem auch als Schaumsonde bezeichneten Sensor gesteuert. Dabei wird ferner vorgeschlagen, daß der Sensor als Leitfähigkeitssonde, die insbesondere vielpolig ist, ausgebildet ist. Werden mindestens zwei Kontaktpole der Sonde von einem leitfähigen Medium berührt, läßt sich über eine Auswerteelektronik die jeweils der Schaumhöhe entsprechend vorgegebene Dosierrate einstellen. Das in den Sammelbecken vorhandene Lackabwasser und damit auch der Schaum haben für diese Zwecke eine ausreichende Leitfähigkeit.

Bei der Steuerung der Dosierpumpe ist es besonders vorteilhaft, wenn die Steuereinheit derart ausgebildet ist, daß die Dosierpumpe mit einer, insbesondere einstellbaren, von Null verschiedenen Do sierrate arbeitet, wenn der Sensor eine geringe Schaumhöhe detektiert.

Weiterhin können Sensor und Auswerteelektronik derart ausgelegt werden, daß unterhalb eines vorgegebenen, niedrigen Schaumniveaus keine Dosierung erfolgt

Ferner wird vorgeschlagen, daß die Steuereinheit als Zweipunktregler mit Hysterese ausgebildet ist.

Es ist auch vorteilhaft, wenn die größere Dosierrate einstellbar ist. Dabei hat es sich als besonders vorteilhaft herausgestellt, wenn die größere Dosierrate mindestens doppelt so groß wie die kleinere Dosierrate ist.

Als besondere Sicherheitsmaßnahme ist eine Alarmeinrichtung vorteilhaft, die vom Sensor beim Detektieren einer bestimmten Maximal-Schaumhöhe aus lösbar ist.

Von der erfindungsgemäßen Dosieranlage können auch mehrere Sammelbecken mit einer zu behandelnden Flüssigkeit bearbeitet werden, auch wenn in den einzelnen Sammelbecken Flüssigkeiten unterschiedlichster Eigenschaften vorliegen. Daher werden mehrere Dosierpumpen mit jeweils einer weiteren Pumpe und jeweils einem Sensor vorgeschlagen. Die Dosierraten für die unterschiedlichen Schaumhöhen und die Schaumhöhen, bei denen die Auswerteelektronik umschaltet, sind für jedes einzelne Sammelbecken unterschiedlich einstellbar.

Im folgenden wird ein Ausführungsbeispiel der Erfindung unter Bezugnahme auf die einzige Figur näher erläutert. Es zeigt:

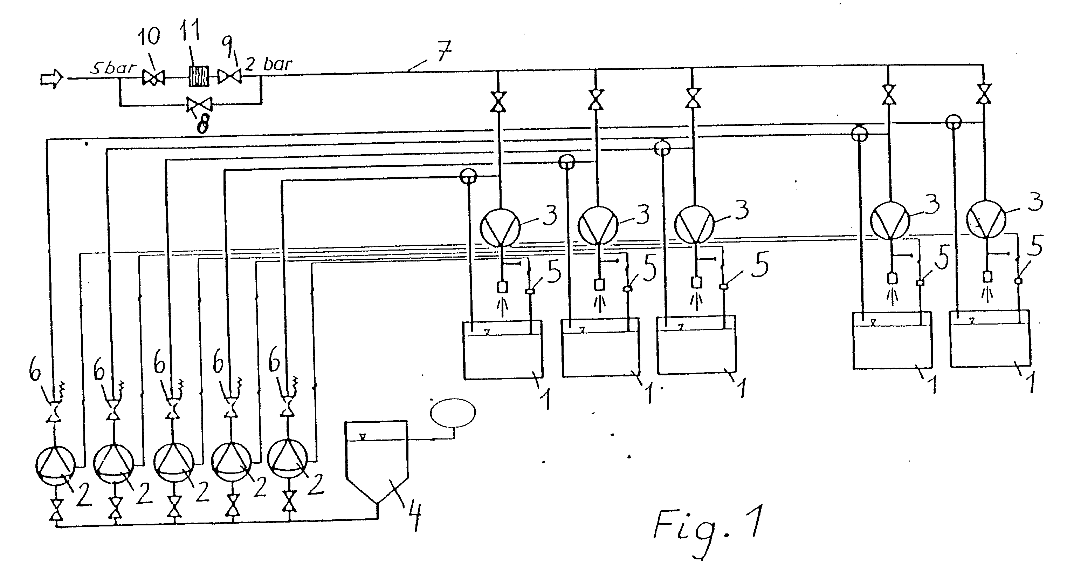

Figur 1 eine Dosieranlage entsprechend der Erfindung mit fünf die zu behandelnden Flüssigkeiten enthaltenden Sammelbecken.

Das in einem Vorratsbehälter vorliegende konzentrierte Additiv 4, im konkreten Fall ein Entschäumer, wird über Ventile von fünf Dosierpumpen 2 über jeweils einen Rückflußverhinderer 6 in die Saugseite der jeweiligen Kreiselpumpe 3, die hier auch als weitere Pumpe bezeichnet wird, dosiert. Die Ventile 6 haben lediglich die Aufgabe eines Rückflußverhinderers. Damit wird verhindert, daß zum einen in Dosierpausen die Entschäumerleitungen rückwärts leerlaufen und zum anderen durch die Leitung 7 Wasser in die Entschäumerleitungen gedrückt wird. Diese fünf Kreiselpumpen 3 saugen bei geöffneten Ventilen 9 und 10 über eine gemeinsame Leitung 7 Verdünnungswasser, nämlich Sammelbeckenwasser oder wahlweise feststoffreduzierten Klarlauf aus einem Sedimenter an. Solche Sedimenter sind Bestandteile von Lackabwasser-Aufbereitungsanlagen. Teil 11 ist lediglich ein Schmutzsieb, Ventil 8 ist ein Bypass für Reinigungszeiten des Schmutzsiebes. Der Sedimenter ist in Figur 1 nicht enthalten.

Wahlweise kann in diesem Ausführungsbeispiel das Entschäumerkonzentrat auch vor der Kreiselpumpe 3 abgezweigt und unverdünnt in das jeweilige Sammelbecken auf die zu behandelnde Flüssigkeit 1 gegeben werden.

Die Regelung der Dosierpumpen 2 arbeitet wie folgt:

Eine vierpolige Schaumsonde 5 taucht mit ihrem Massenkontakt in die Wasseroberfläche des Sammelbeckens ein. In einem vertikalen Abstand von 200 mm zur Wasseroberfläche befindet sich der Minimum-Kontakt, 200 mm darüber der Maximum-Kontakt und wiederum 200 mm darüber ein Alarm-Kontakt. Bei schaumfreier Beckenoberfläche läuft die Dosierpumpe 2 mit einer Dosierrate, die vorher am Minimum-Steiler der Auswerteelektronik eingestellt wurde Wird der Minimum-Kontakt von ansteigendem Schaum erreicht, passiert zunächst nichts. Bei weiterem Schaumanstieg und Erreichen des Maximum-Kontaktes schaltet die Auswerteelektronik auf die an einem Maximum-Steiler vorgegebene Dosierrate um.

Diese Dosierrate muß ein Vielfaches der Minimum-Dosierrate betragen. Steigt aber der Schaum trotz Erhöhung der Entschäumerzugabe weiterhin an und erreicht den Alarm-Kontakt, so wird von der Auswerteelektronik dieser Störfall als Hupenalarm am Leitstand der Abwasseraufbereitung angezeigt, und manuelles Eingreifen ist erforderlich. War die Erhöhung der Entschäumerzugabe erfolgreich, so daß das Schaumniveau sinkt, so schaltet die Auswerteelektronik beim Unterschreiten des Minimum-Kontaktes wieder auf die durch den Minimum-Steiler vorgegebene Dosierrate zurück.

Denkbar sind auch andere Schaltungsvarianten. So kann man beispielsweise auf die kontinuierliche Zugabe von Entschäumer in der Minimum-Dosierrate verzichten und die Dosierung beim Schaumanstieg erst beim Erreichen des Minimum-Kontaktes aktivieren und bei Schaumrückgang unter den Minimum-Kontakt kann die Entschäumerdosierung wieder abgeschaltet werden. Ebenso ist eine der Schaumhöhe angepaßte, mehrstufige Dosierratenverstellung denkbar.

## Bezugszeichenliste

1 Flüssigkeit; zu behandelndes Wasser
2 Dosierpumpe
3 weitere Pumpe, Kreiselpumpe
4 Additiv (konzentriert), Entschäumer
5 Sensor für Schaumhöhe, Schaumsonde
6 Rückflußverhinderer
7 Leitung für Verdünnungswasser
8 Absperrarmatur
9 Absperrarmatur
10 Druckreduzierventil
11 Schmutzsieb

## Ansprüche

1. Dosieranlage für flüssige oder pastöse Additive (4), zum Behandeln von Flüssigkeiten (1), insbesondere von Wasser, mit einer Dosierpumpe (2) zum Dosieren der Additive (4) und einer weiteren Pumpe (3), deren Eingang an den Ausgang der Dosierpumpe (2) und an ein Verdünnungsmedium oder die zu behandelnde Flüssigkeit (1) angeschlossen ist,

**gekennzeichnet durch**

einen die Schaumhöhe der zu behandelnden Flüssigkeit erfassenden Sensor (5) und eine daran angeschlossene Steuereinheit zum Ansteuern der Dosierpumpe (2) in Abhängigkeit von der gemessenen Schaumhöhe.

2. Dosieranlage nach Anspruch 1,

**dadurch gekennzeichnet,**

daß der Sensor (5) als Leitfähigkeitssonde, die insbesondere vielpolig ist, ausgebildet ist.

3. Dosieranlage nach Anspruch 1 oder 2,

**dadurch gekennzeichnet,**

daß die Steuereinheit derart ausgebildet ist, daß die Dosierpumpe (2) mit einer, insbesondere einstellbaren, von Null verschiedenen Dosierrate arbeitet, wenn der Sensor (5) keinen Schaum detektiert.

4. Dosieranlage nach Anspruch 1 oder 2,

**dadurch gekennzeichnet,**

daß die Steuereinheit derart ausgebildet ist, daß die Dosierrate bei Unterschreiten eines vorgegebenen, niederen Schaumniveaus auf Null gestellt wird.

5. Dosieranlage nach Anspruch 1 bis 3,

**dadurch gekennzeichnet,**

daß die Steuereinheit als Zweipunktregler mit Hysterese ausgebildet ist.

6. Dosieranlage nach Anspruch 4,

**dadurch gekennzeichnet,**

daß die größere Dosierrate einstellbar ist.

7. Dosieranlage nach Anspruch 4 oder 5,

**dadurch gekennzeichnet,**
daß die größere Dosierrate mindestens doppelt so groß wie die kleinere Dosierrate ist.

8. Dosieranlage nach einem der Ansprüche 1 bis 6, **gekennzeichnet durch**
eine Alarmeinrichtung, die vom Sensor (5) beim Detektieren einer bestimmten Mindest-Schaumhöhe aus lösbar ist.

9. Dosieranlage nach einem der Ansprüche 1 bis 7, **gekennzeichnet durch**
mehrere Dosierpumpen (2) mit jeweils einer weiteren Pumpe (3) und jeweils einem Sensor (5).

Fig. 1